(19) **Europäisches Patentamt / European Patent Office / Office européen des brevets**

(11) **EP 4 730 210 A1**

(12) # EUROPEAN PATENT APPLICATION

(43) Date of publication:
22.04.2026 Bulletin 2026/17

(21) Application number: 25195916.9

(22) Date of filing: 14.08.2025

(51) International Patent Classification (IPC):
**G06N 5/01** (2023.01)          **G06N 20/20** (2019.01)

(52) Cooperative Patent Classification (CPC):
**G06N 5/01; G06N 7/01; G06N 20/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **15.10.2024 US 202418915841**

(71) Applicant: **SAP SE
69190 Walldorf (DE)**

(72) Inventor: **DESREUMAUX, Louis
69190 Walldorf (DE)**

(74) Representative: **Müller-Boré & Partner
Patentanwälte PartG mbB
Friedenheimer Brücke 21
80639 München (DE)**

(54) **SYSTEMS AND METHODS FOR AUTOMATED MACHINE LEARNING**

(57) Embodiments of the present disclosure include techniques for automatically generating machine learning models. In one embodiment, sets of hyperparameters corresponding to machine learning models trained on one training data set are provided as an input. The hyperparameters are iteratively selected using an algorithm, such as a bandit algorithm, and used to train an ML model using another training data set. The performance of the trained ML model is evaluated on each iteration until the ML model performance is above a threshold. The resulting model may be used to train a resulting model. In some embodiments, ML models are combined across iterations to improve performance.

EP 4 730 210 A1

Description

## BACKGROUND

The present disclosure relates generally to machine learning, and in particular, to systems and methods for automated machine learning.

Automated Machine Learning (AutoML) is revolutionizing the field of machine learning by automating the process of selecting and optimizing algorithms and hyperparameters. Generally, machine learning involves using data sets to train machine learning models to perform machine learning tasks.

Hyperparameter optimization, a crucial component of AutoML, involves fine-tuning various parameters that control the learning process of machine learning models. This is typically a resource-intensive task, requiring the training of numerous models to determine the most effective hyperparameters, thus consuming substantial computational resources.

Accordingly, automation of machine learning involves the technical problem of automatically determining hyperparameters and corresponding models used during the training process. The present disclosure is directed at techniques that provide a technical solution to this problem.

## BRIEF DESCRIPTION OF THE DRAWINGS

Fig. 1 illustrates a system for performing automated machine learning according to an embodiment.

Fig. 2 illustrates a method for automated machine learning according to an embodiment.

Fig. 3A illustrates a method for generating sets of hyperparameters according to an embodiment.

Fig. 3B illustrates a system for performing automated machine learning according to another embodiment.

Fig. 3C illustrates an example of generating sets of hyperparameters according to an embodiment.

Fig. 3D illustrates boosting according to an embodiment.

Fig. 3E illustrates an example decision tree according to an embodiment.

Fig. 4A illustrates an example boost algorithm.

Fig. 4B illustrates an example adversarial bandit algorithm.

Fig. 5 illustrates hardware of a special purpose computing system configured according to the above disclosure.

## DETAILED DESCRIPTION

Described herein are techniques for performing automated machine learning. In the following description, for purposes of explanation, numerous examples and specific details are set forth in order to provide a thorough understanding of some embodiments. Various embodiments as defined by the claims may include some or all of the features in these examples alone or in combination with other features described below and may further include modifications and equivalents of the features and concepts described herein.

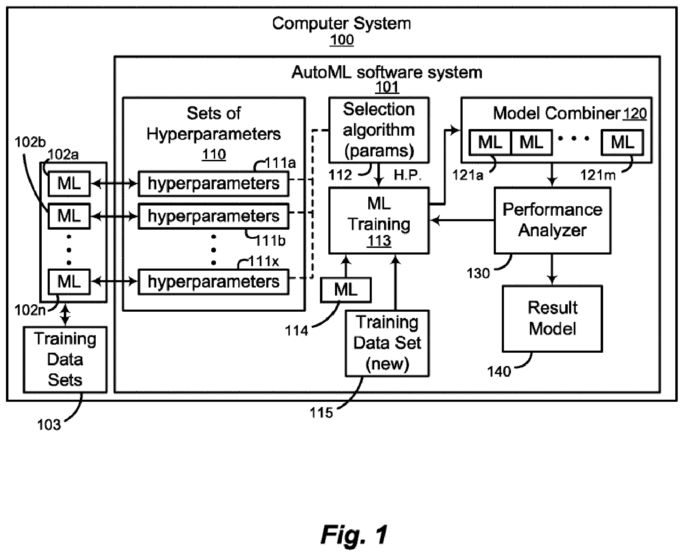

Fig. 1 illustrates a computer system 100 configured to perform automated machine learning ("AutoML") according to an embodiment. Features and advantages of the present disclosure include optimization of hyperparameters without the need for training multiple models. This approach may offer significant advantages in certain computing environments, especially in terms of computational cost. It may be particularly beneficial in low-resource environments, where traditional hyperparameter optimization methods may be impractical due to their heavy computational demands, for example. As shown in Fig. 1, a computer system 100 may execute AutoML software system 101, which may comprise one or more software components, for example. Computer system 100 receives sets of hyperparameters 110, including a set of hyperparameters 111a-111x, for example. A set of hyperparameters typically includes one or more parameter values for configuring a machine learning model during training. A set of hyperparameters may also be referred to herein simply as "hyperparameters." Hyperparameters 111a-x may be associated with machine learning models ("ML") 102a-n. MLs 102a-n may have been previously trained using training data sets 103, for example, and have a same machine learning model type (e.g., a tree model). During training of MLs 102a-n, hyperparameters 111a-x may have been determined. In some embodiments described in more detail below, hyperparameters 111a-x may be generated according to an algorithm that produces particularly efficient (aka, optimized according to the algorithm) hyperparameters for training MLs 102a-n using training data sets 103, for example. Accordingly, hyperparameters 111a-x are configured to train a corresponding plurality of machine learning models 102a-n using training data sets 103.

Typically, hyperparameters are external configuration variables that data scientists use to manage machine learning model training. Sometimes called model hyperparameters, the hyperparameters are manually set before training a model. In contrast, a more general "parameter" in machine learning is a variable that is learned from the data during the training process. These parameters are used to represent the underlying relationships in the data and to make predictions on new data, for example. A hyperparameter, on the other hand, is a variable that is set before the training process begins. For example, a hyperparameter in a Random Forest tree is the number of trees (e.g., n_estimators), which is the number of decision trees that will be created in the forest. Hyperparameters in decision trees include criteria for splitting (e.g., Gini impurity or entropy), maximum depth, minimum samples per leaf, and the number of features considered for splitting, for example. As used herein, a set of hyperparameters is one or more parameters of a machine learning model set before training to configure certain aspects of the models behavior as it is trained.

As mentioned above, one technical challenge to automated machine learning ("AutoML") is determining an effective set of hyperparameters to use when applying a training data set to a particular machine learning model. Embodiments of the present disclosure include a solution to this technical problem. For instance, in some cases, new training data 115 not included in training data 103 is received, and it may be desirable to generate a machine learning model using hyperparameters optimized around the new training data. Here, training data set 115 is received by the AutoML software system 101 and a new machine learning model 140 is generated automatically using hyperparameters 111a-x. The system of Fig. 1 may execute a number of iterations as follows. First, a selection algorithm software component 112 selects one of the plurality of sets of hyperparameters 111a-x. As discussed in more detail below, in some example embodiments the selection algorithm may be a "bandit" algorithm, such as an adversarial bandit algorithm for selecting a particular hyperparameter set 111a-x on each iteration. Next, a machine learning training software component ("ML Training") 113 receives a machine learning model (ML) 114 and the new training data set 115. ML 114 may be an initial machine learning model of the same machine learning model type as MLs 102a-n, for example, so the hyperparameters 111a-x are relevant to execution of ML 114. ML training block 113 trains ML 114 using training data set 115 and the hyperparameters selected by selection algorithm 112. A model combiner software component 120 combines the trained ML 114 with machine learning models previously trained over the plurality of iterations. For example, on a first iteration, ML 114 is trained and no combination occurs because it is the first trained machine learning model. On the next iteration, a trained machine learning model (using different hyperparameters as will be discussed) is trained and combined with the previously trained machine learning model (e.g., ML 121a). On subsequent iterations, trained models (e.g., using different hyperparameters 111a-x) from ML Training block 113 are combined with additional trained models ML 121a-m, for example.

Next, the output of model combiner 120 is provided to a performance analyzer software component 130. Performance analyzer 130 determines a combined performance of the combined machine learning models, such as the most recently trained ML and the one or more machine learning models 121a-m previously trained over previous iterations, for example. Performance analyzer 130 may determine if a change in the combined performance of the machine learning models meets a threshold (e.g., $\Delta P > Th$). When the change in the combined performance of the trained models does not meet the threshold, selection algorithm 112 is modified based on the change in the combined performance (e.g., between a current performance on the current iteration and one or more previous performance iterations).

As mentioned above, selection algorithm 112 selects different hyperparameters on different iterations. Selection algorithm 112 may select hyperparameters differently on each iteration based on modifications to selection algorithm parameters over each iteration, for example. Accordingly, the system iteratively selects hyperparameters 111a-x using a dynamic selection algorithm to train a machine learning model and form a combined machine learning model (e.g., comprising MLs 121a-m).

Finally, a trained result model 140 is produced. Result model 140 may be produced, for example, after either a stopping condition is reached or a maximum number of iterations. For example, result model 140 may be produced when the change in the combined performance meets the threshold (or equivalent). In some embodiments, result model 140 may comprise a plurality of combined machine learning models previously trained over the plurality of iterations.

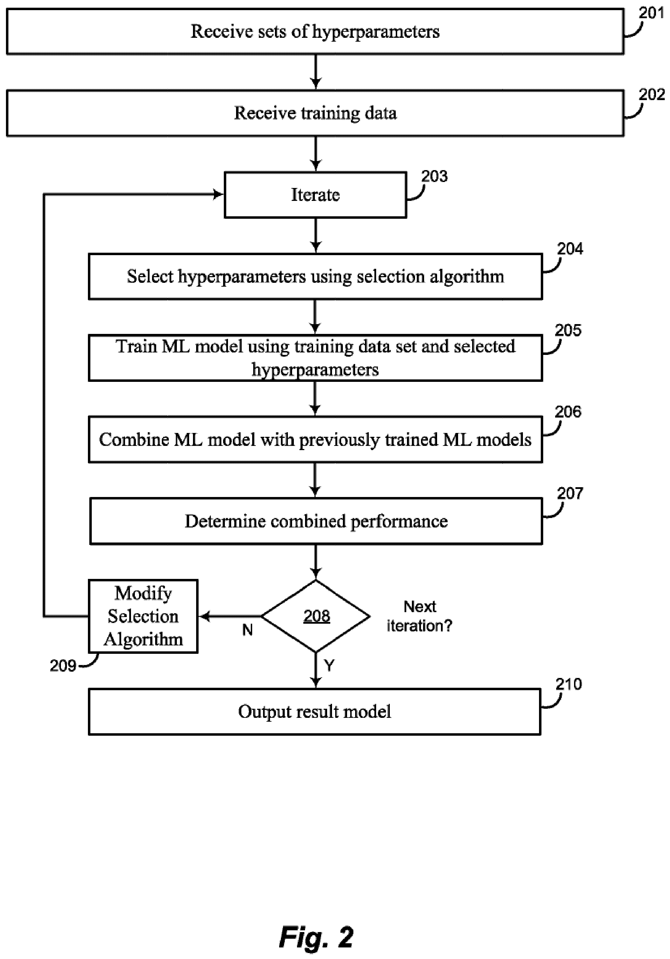

Fig. 2 illustrates a method for automated machine learning according to an embodiment. At 201, sets of hyperparameters are received. The sets of hyperparameters are configured to train a corresponding plurality of machine learning models using a plurality of training data sets. The machine learning models have the same machine learning model type. At 202 a new training data set not included in the plurality of training data sets is received. At 203, the method begins to iterate over a plurality of iterations. At 204, one of the plurality of sets of hyperparameters is selected based on a first selection algorithm. At 205, a first machine learning model is trained using the first training data set and the selected one of the plurality of sets of hyperparameters. The first machine learning model has the same machine learning model type as the plurality of machine learning models using the hyperparameters from 201. At 206, the first machine learning model is combined with one or more machine learning models previously trained over the plurality of iterations. At 207, a combined performance is determined. The combined performance is for the combined first machine learning model and the one or more machine learning models previously trained over the plurality of iterations. At 208, the method determines if another iteration is to be performed (e.g., a change in the combined performance meets a threshold). For example, when a change in the combined performance does not meet the threshold, the selection algorithm is modified (e.g., based on the change in the combined performance) at 209 and the method returns to 203-207 to select a new hyperparameter based on the modified selection algorithm, train the ML, combine the ML, and determine a combined performance. However, when the iterations are done (e.g., when a change in the combined performance meets the threshold), the result model is produced. The result model comprises the first machine learning model and one or more machine learning models previously trained over the plurality of iterations. The trained result model is output at 210.

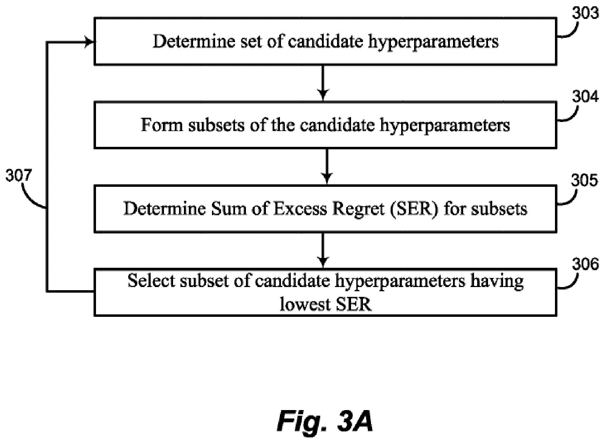

Fig. 3A illustrates a method for generating sets of hyperparameters according to an embodiment. In some embodiments, the sets of hyperparameters used to generate the machine learning model described above may be generated as follows. At 303, a set of candidate hyperparameters is determined. For example, in some embodiments, a state-of-the-art hyperparameter optimization algorithm may be used to generate an initial candidate set, such as the Tree-structured Parzen Estimator method available in the Optuna library, for example. This process involves a large hyperparameter search space and cross-validation for model performance evaluation. The time budget for such an operation may be substantial (e.g., 10 hours per experiment). Due to the computational intensity of this process of generating sets of hyperparameters, the process may be performed offline, for example. This step yields a set of hyperparameters, which also referred to herein as candidate configurations $C = \{c_1, \dots, c_N\}$, each representing an optimal hyperparameter setup for the corresponding tasks $T = \{t_1, \dots, t_N\}$ (e.g., training tasks). At 304, subsets of the candidate hyperparameters are formed. For example, this step may involve constructing a reduced set, or portfolio, of effective hyperparameter configurations, leveraging configuration and task data in a regret matrix, as described further below. At 305, a Sum of Excess Regret (SER) is determined for the subsets of hyperparameters. At 306, a subset of candidate hyperparameters (aka, a portfolio) having the lowest SER may be selected and used as the set of hyperparameters for iteratively generating the machine learning model as described above. As illustrated at 307, the algorithm iterates through these steps, beginning with an empty set of hyperparameter configurations and progressively adding configurations until a stopping criteria are met.

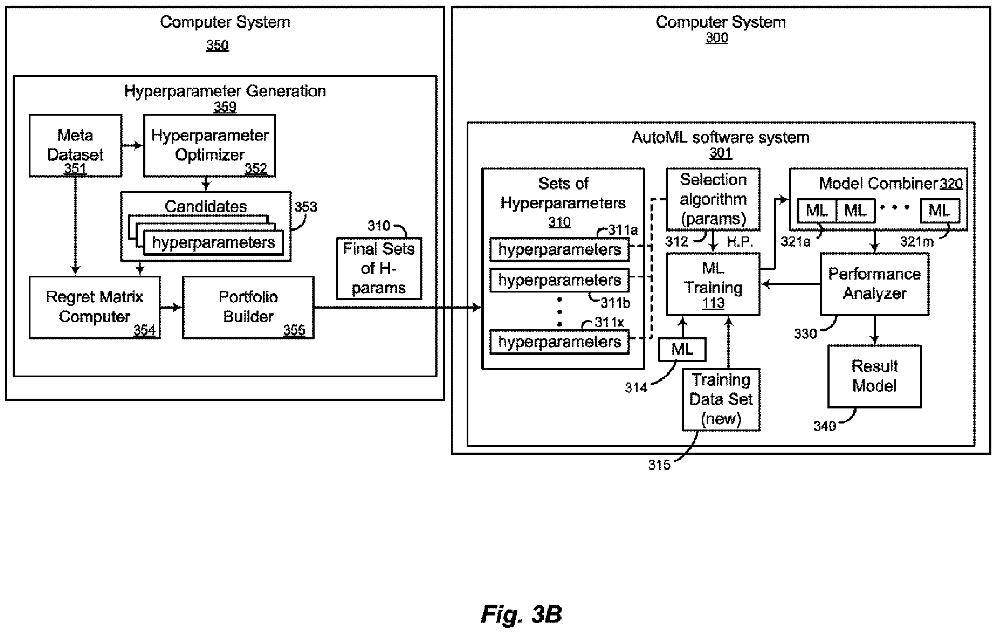

Fig. 3B illustrates a system for performing automated machine learning according to another embodiment. In this example, computer system 350 includes software 359 for generating sets of hyperparameters used to generate a machine learning algorithm on computer system 300, for example. In some embodiments, software for generating sets of hyperparameters may be running computer system 350 offline and AutoML software 301 may run online on computer system 300. Hyperparameter generation software 359 may include meta-dataset 351, hyperparameter optimizer 352 to generate candidate sets of hyperparameters 353, regret matrix computer 354, and portfolio builder 355 that outputs final hyperparameter (aka, H-params) sets 310. Sets of hyperparameters are received by AutoML software 301, which may operate as described in Fig. 1, for example.

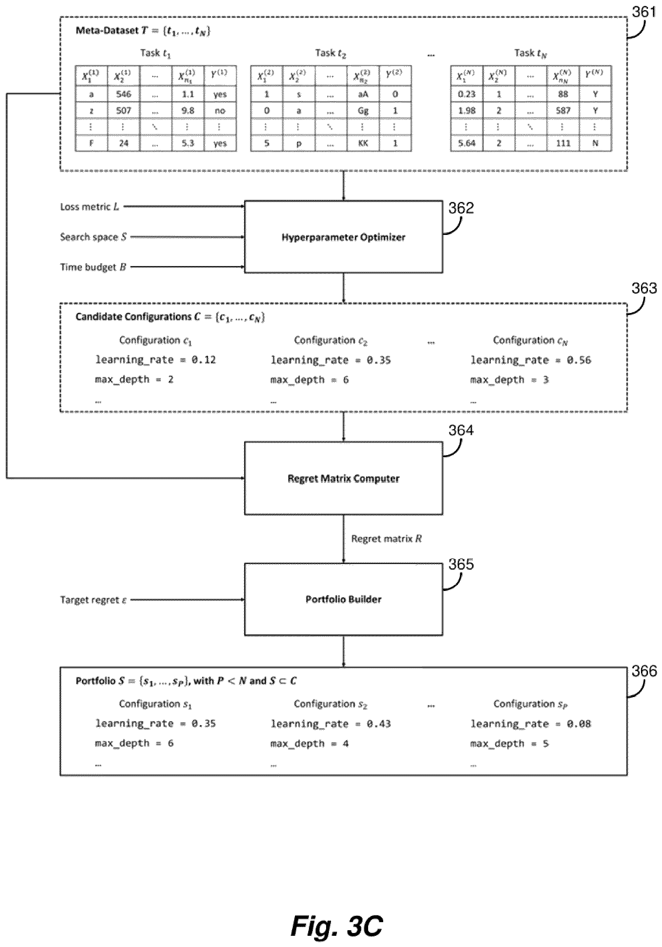

Fig. 3C illustrates generating sets of hyperparameters according to an embodiment. Blocks 361-366 illustrate an example implementation of blocks 351-355 and 310, respectively.

Meta dataset 361 comprises training data for configuring machine learning models to perform tasks. A task refers to a specific learning problem involving tabular data, which includes its own dataset with distinct features (or columns) and a target variable to predict. For example, one task might involve a dataset with numerical and categorical features to predict a binary outcome. A meta-learning algorithm leverages diverse tasks to learn a reduced set of generalizable hyperparameter settings that can be used in new, unseen tabular tasks effectively. Hundreds of such tasks may be considered, but only a few (typically less than 10) high-performing hyperparameter configurations are retained as the result of the meta-learning process. Hyperparameter optimizer 362 receives the dataset 361 and parameters, including a loss metric $L$, search space $S$, and time budget $B$, for example and outputs a set of candidate configurations $C = \{c_1, \dots, c_N\}$, each representing an optimal hyperparameter setup for the corresponding tasks $T = \{t_1, \dots, t_N\}$ (e.g., training machine models 102a-n). Example hyperparameters are illustrated at 363, including learning rates and maximum depths, for example. At 364 a regret matrix is constructed (e.g., R by evaluating the Cartesian product of configurations C and tasks T). One example regret matrix R is as follows:

$$R = \begin{array}{c} t_1 \\ \vdots \\ t_N \end{array} \begin{bmatrix} L(c_1, t_1) - L(c^\star(t_1), t_1) & \cdots & L(c_N, t_1) - L(c^\star(t_1), t_1) \\ \vdots & \ddots & \vdots \\ L(c_1, t_N) - L(c^\star(t_N), t_N) & \cdots & L(c_N, t_N) - L(c^\star(t_N), t_N) \end{bmatrix}.$$

Here, $L$ is the loss metric (bounded between 0 and 1), and $c^*(t)$ denotes the best configuration in $C$ for task $t$. In the next step, portfolio builder 365 constructs a reduced set, or portfolio, of effective hyperparameter configurations, leveraging the data in the regret matrix. For this, a portfolio selection algorithm is used. This algorithm is a greedy approach that starts with an empty set $S$ and incrementally adds one configuration at a time. The iterative process includes: (1) building $\mathbb{S} = \{S \cup \{c\} \mid c \in C\}$: a set of sets, each formed by adding a new configuration to the current portfolio set, and (2), calculating the Sum of Excess Regret (SER) for each candidate set in $\mathbb{S}$ as follows:

$$L_{\mathrm{SER}} = \left\{ \sum_{t \in T_{\mathrm{train}}} \max \left[ \min_{s \in S'} R(t,s) - \epsilon, 0 \right] \,\middle|\, S' \in \mathbb{S} \right\}.$$

Here, input $\varepsilon = 0.01$ is the target regret, beyond which further improvements are disregarded.
Next, the system selects the candidate portfolio with the lowest SER. In cases of ties (difference $< 10^{-5}$), the Mean Regret (MR) is used as a tiebreaker:

$$L_{\mathrm{MR}} = \left\{ \frac{1}{|T_{\mathrm{train}}|} \sum_{t \in T_{\mathrm{train}}} \min_{s \in S'} R(t,s) \,\middle|\, S' \in \mathbb{S} \right\}.$$

Stopping conditions may be checked using (i) $\min L_{SER} \leq 10^{-5}$, *i.e.* the target regret has been reached for all tasks or (ii) an early stopping trigger: $\min L_{MR} > \min L_{MR}^{previous} - 10^{-5}$. The final output is a compact portfolio of effective hyperparameter configurations, achieving a target regret of $\varepsilon = 0.01$ across all training tasks. If the portfolio size is excessively large, the target regret may be adjusted upward slightly and reapply the selection algorithm. The output portfolio, $S$, a set of hyperparameters, is shown at 366, which is an example of hyperparameter sets 110 and 310.

Having generated sets of hyperparameters, embodiments of the present disclosure shift from conventional methods that focused on predicting the optimal configuration from a predefined portfolio for a new task (e.g., generating a new machine learning model using a new training data set). In one example embodiment, one technique is distinguished from existing approaches, at least in part, by targeting the optimization of hyperparameters in boosting models rather than pursuing the meta-feature-based prediction approach. We propose a simpler yet potentially more effective strategy: combining configurations (e.g., using all the input sets of hyperparameters) from the portfolio during the learning process of boosting models.

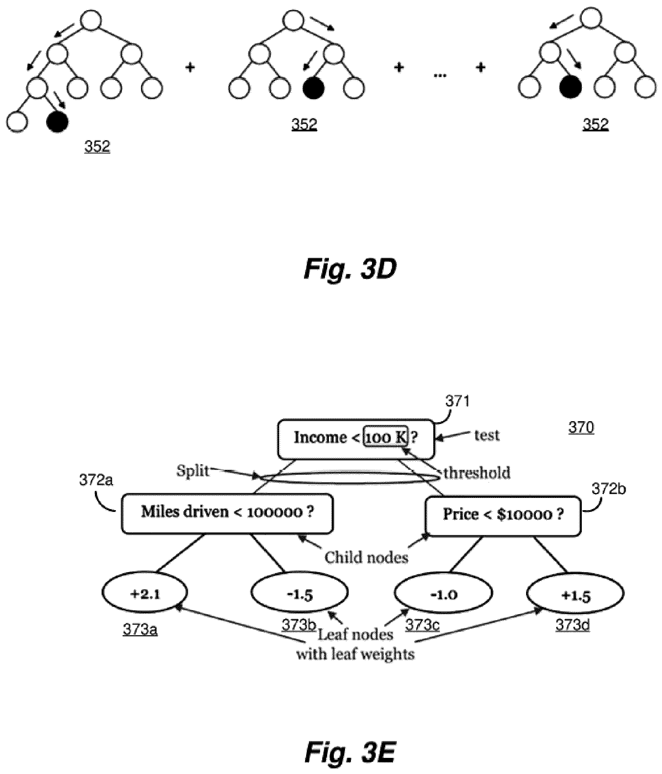

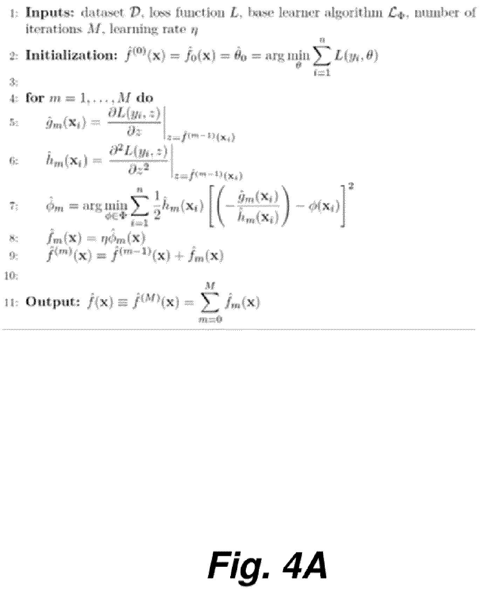

Boosting is an ensemble machine learning technique that combines several weak learners to create a strong learner. In some embodiments, boosting works by sequentially training new models to correct the mistakes of previous ones, with each model focusing more on the instances that were misclassified by its predecessors. The final prediction is the sum of the predictions from combined weak learners. Fig. 3D illustrates boosting, where machine learning models are combined (e.g., as described above in Figs. 1 and 2) to form a combined machine learning model, for example. More specifically, a boosting algorithm combines multiple "weak learners" - simple models with limited predictive power - in an iterative manner to form a more accurate aggregate model. A commonly used example in this category is the Gradient Boosting algorithm (e.g., XGBoost, shown in Fig. 4A). Typically, in boosting algorithms, all weak learners share a single hyperparameter configuration. However, embodiments of the present disclosure diverge from this norm by varying hyperparameters across boosting iterations.

Various types of weak learners can be used, including decision trees, linear models, Naive Bayes classifiers, and even simple neural networks. Fig. 3E illustrates an example decision tree according to an embodiment. The decision tree is a well-known statistical model. Given a data point with multiple features, we traverse the tree from the top 371 to bottom, performing a series of tests. At each intermediate node 372a-b, we compare a feature against a threshold. Depending on the result of the comparison, we proceed to either left or right child nodes 373a-b or 373c-d. So we would traverse different paths, depending on the data point. The traversal is complete when we reach one of the leaf nodes. Each leaf node 373a-d gives rise to an instance set, the set of all data points for which traversal ended at that leaf node. The leaf is also associated with leaf weight that indicates the prediction to be made for all data points in the instance set. Decision trees are computationally efficient, and they can handle mixed data types: numerical (continuous or discrete) and categorical (nominal or ordinal) features. In some embodiments, decision trees are used as weak learners in boosting algorithms due to their ability to capture nonlinear relationships and interactions between features.

Embodiments of the present disclosure may conduct offline meta-learning on a diverse set of training tasks and then employ meta-learning to create a condensed portfolio of high-performing hyperparameter configurations. However, rather than attempting to predict the single best configuration for a new task, embodiments select particular hyperparameters (e.g., using a multi-armed bandit theory) over an iterative process. This enables the integration of multiple hyperparameters (aka, configurations) during the training process where boosting models may be generated, allowing for a more dynamic and more effective approach to model training.

The multi-armed bandit problem, a fundamental concept in decision theory and reinforcement learning, may be advantageously used to selecting hyperparameter sets. This problem is named after a row of slot machines (sometimes called "one-armed bandits") in a casino. Each machine (or "arm") provides a random reward from a probability distribution specific to that machine. The challenge is to find a strategy that maximizes the amount of reward received over a series of plays. The core of the multi-armed bandit theory revolves around the dilemma of exploration versus exploitation. Exploration involves trying out different machines to understand their reward patterns, while exploitation means sticking with the machine that seems to offer the best rewards based on current information. Accordingly, embodiments of a selection algorithm may have input parameters corresponding to exploration and/or exploitation.

In the present AutoML framework, the process dynamically updates the hyperparameter set used at each iteration of the training process for boosting models (e.g., as in Fig. 2). Each "arm" represents a different hyperparameter set from our meta-learned portfolio of hyperparameter sets. The "reward" according to certain embodiments is a performance improvement on a validation partition of the dataset applied during performance analysis, for example. Some embodiments may exclude the number of boosting iterations from the hyperparameters, optimizing it separately through an early stopping technique, for example, which may monitor the model's performance on a validation set during training and stop the training process when the performance stops improving or starts to deteriorate. A maximum number of boosting iterations may be set in some embodiments to avoid excessively long training times.

The multi-armed bandit problem has several popular variants, each tailored to different scenarios and challenges. Applications to hyperparameter selection may correspond to a non-stationary reward system, where rewards typically decrease with each training iteration. For example, for non-stationary systems, the probability distribution associated with each action's reward can change over time, as the boosting process progresses. For example, at one stage, one hyperparameter configuration might offer the best performance improvement, but at a later stage, another configuration might yield better results. Furthermore, we assume no specific form for the reward distributions of each hyperparameter configuration. Accordingly, some embodiments may use an adversarial multi-armed bandit algorithm (herein, adversarial bandit algorithm), where rewards are controlled by an adversary who can unpredictably alter reward distributions, which mirrors the present dynamic and unpredictable training environment.

The goal in the adversarial bandit problem is often framed as minimizing regret, which is the difference between the rewards that could have been gained by always choosing the best arm in hindsight and the rewards actually gained. Useful adversarial bandit algorithms should be selected to be robust to the changes in the reward distributions. They need to quickly adapt to new information while being resilient to potentially misleading reward patterns created by the adversary. Adversarial bandit algorithms that meet the designs constraints of the target system are known to those skilled in the art.

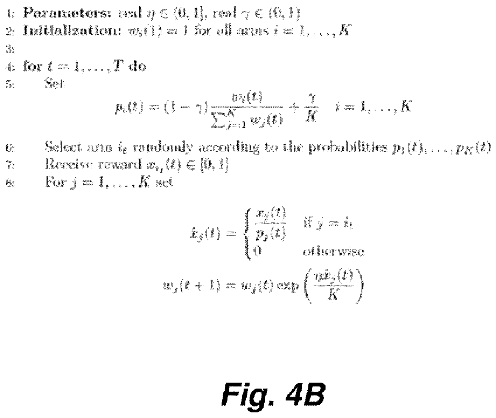

In one embodiment, the EXP3 adversarial bandit algorithm may be used, which stands for "Exponential weights for Exploration and Exploitation." EXP3 is a strategy specifically designed for the adversarial bandit problem. The EXP3 algorithm is shown in Fig. 4B. EXP3 balances exploration and exploitation through a probability distribution that favors arms with historically better rewards while still allowing for exploration. Its exponential update rule allows rapid adaptation to changing reward distributions, aiming to minimize regret. EXP3 guarantees a regret bound that is sublinear in the number of rounds, which implies that the average regret per round approaches zero as the number of rounds increases. This property may be significant because it ensures that the algorithm's performance improves over time, even in the presence of an adversary.

The EXP3 algorithm is an example of an adversarial algorithm where parameters of the algorithm may be changed based on the performance of the model as described above. In this example, the EXP3 algorithm involves two input parameters: $\eta$ and $\gamma$. $\eta$ is the learning rate parameter, which controls the step size in the update of the weights of the arms. A larger $\eta$ means faster learning. $\gamma$ is the exploration parameter, which controls the amount of exploration the algorithm performs. A larger $\gamma$ means more exploration.

In one embodiment, updating the selection algorithm on each iteration may include updating the algorithm's weights $w_i$. The following example iterations show updating weights of the EXP3 algorithm but not the input parameters $\eta$ and $\gamma$. The following example includes 10 consecutive iterations, where the first arm consistently outperforms the second arm. The following EXP3 parameters are used: $\eta = 1$, $\gamma = 0.1$, K = 2, and T = 10. Over 10 iterations, the rewards for arm 0 = [0.2, 0.2, 0.2, 0.1, 0.07, 0.05, 0.05, 0.05, 0.02, 0.02] and the rewards for arm 1 = [0.1, 0.05, 0.01, 0.01, 0.005, 0.005, 0.001, 0.001, 0.001, 0.001]. The probabilities, selections, reward, and updated weights for each iteration are as follows:

Iteration 1: Probabilities: [0.5 0.5], Selected action: 0, Reward: 0.2, Updated weights: [1.22140276 1.]

Iteration 2: Probabilities: [0.5448506 0.4551494], Selected action: 1, Reward: 0.05, Updated weights: [1.22140276 1.05646351]

Iteration 3: Probabilities: [0.53258429 0.46741571], Selected action: 0, Reward: 0.2, Updated weights: [1.47368152 1.05646351]

Iteration 4: Probabilities: [0.57420448 0.42579552], Selected action: 0, Reward: 0.1, Updated weights: [1.60775806 1.05646351]

Iteration 5: Probabilities: [0.59311633 0.40688367], Selected action: 0, Reward: 0.07, Updated weights: [1.70548759 1.05646351]

Iteration 6: Probabilities: [0.60574439 0.39425561], Selected action: 0, Reward: 0.05, Updated weights: [1.77734838 1.05646351]

Iteration 7: Probabilities: [0.61447414 0.38552586], Selected action: 1, Reward: 0.001, Updated weights: [1.77734838 1.05783456]

Iteration 8: Probabilities: [0.61420117 0.38579883], Selected action: 0, Reward: 0.05, Updated weights: [1.85118478 1.05783456]

Iteration 9: Probabilities: [0.62272438 0.37727562], Selected action: 0, Reward: 0.02, Updated weights: [1.88115194 1.05783456]

Iteration 10: Probabilities: [0.62606142 0.37393858], Selected action: 1, Reward: 0.001, Updated weights: [1.88115194 1.05924995]

Cumulative reward (final performance): 0.7420000000000002

It is to be understood that numerous variants of the EXP3 algorithm or other algorithms may be used as the selection algorithm. Further, strategies for selecting or dynamically updating an exploration parameter $\gamma$, learning rate $\eta$, or other selection algorithm parameters may also be used in various embodiments, which would be known to those skilled in the art. Accordingly, the present disclosure is adaptable and not restricted to a specific bandit algorithm. However, while it can be applied to algorithms not specifically designed for the adversarial bandit problem, certain applications may benefit from using algorithms that achieve a sublinear regret bound.

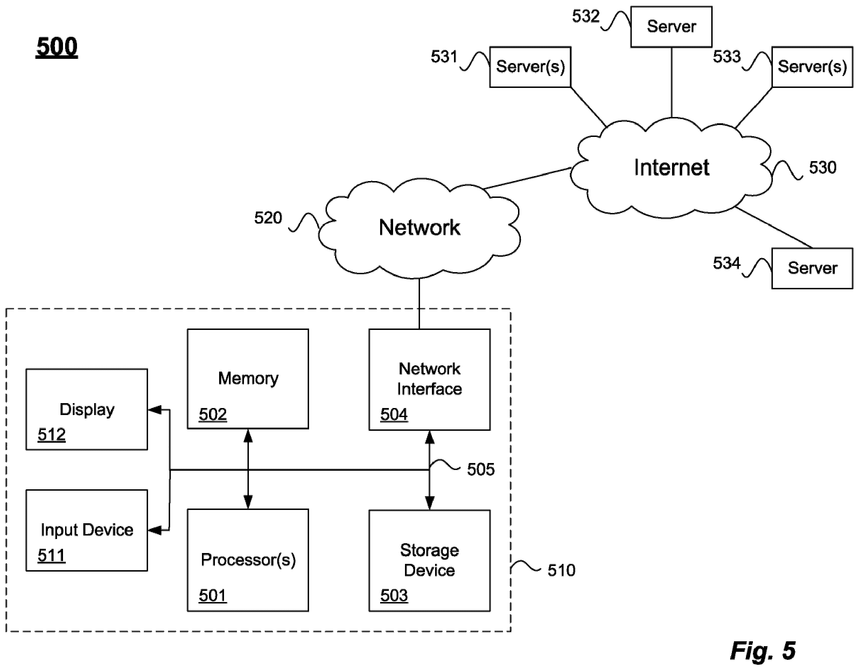

Fig. 5 illustrates hardware of a special purpose computing system 500 configured according to the above disclosure. The following hardware description is merely one example. It is to be understood that a variety of computers topologies may be used to implement the above-described techniques. An example computer system 510 is illustrated in Fig. 5. Computer system 510 includes a bus 505 or other communication mechanism for communicating information, and one or more processor(s) 501 coupled with bus 505 for processing information. Computer system 510 also includes memory 502 coupled to bus 505 for storing information and instructions to be executed by processor 501, including information and instructions for performing some of the techniques described above, for example. Memory 502 may also be used for storing programs executed by processor(s) 501. Possible implementations of memory 502 may be, but are not limited to, random access memory (RAM), read only memory (ROM), or both. A storage device 503 is also provided for storing information and instructions. Common forms of storage devices include, for example, a hard drive, a magnetic disk, an optical disk, a CD-ROM, a DVD, solid state disk, a flash or other non-volatile memory, a USB memory card, or any other electronic storage medium from which a computer can read. Storage device 503 may include source code, binary code, or software files for performing the techniques above, for example. Storage device 503 and memory 502 are both examples of non-transitory computer readable storage mediums (aka, storage media).

In some systems, computer system 510 may be coupled via bus 505 to a display 512 for displaying information to a computer user. An input device 511 such as a keyboard, touchscreen, and/or mouse is coupled to bus 505 for communicating information and command selections from the user to processor 501. The combination of these components allows the user to communicate with the system. In some systems, bus 505 represents multiple specialized buses for coupling various components of the computer together, for example.

Computer system 510 also includes a network interface 504 coupled with bus 505. Network interface 504 may provide two-way data communication between computer system 510 and a local network 520. Network 520 may represent one or multiple networking technologies, such as Ethernet, local wireless networks (e.g., WiFi), or cellular networks, for example. The network interface 504 may be a wireless or wired connection, for example. Computer system 510 can send and receive information through the network interface 504 across a wired or wireless local area network, an Intranet, or a cellular network to the Internet 530, for example. In some embodiments, a frontend (e.g., a browser), for example, may access data and features on backend software systems that may reside on multiple different hardware servers on-prem 531 or across the network 530 (e.g., an Extranet or the Internet) on servers 532-534. One or more of servers 532-534 may also reside in a cloud computing environment, for example.

## FURTHER EXAMPLES

Each of the following non-limiting features in the following examples may stand on its own or may be combined in various permutations or combinations with one or more of the other features in the examples below. In various embodiments, the present disclosure may be implemented as a system, method, or computer readable medium.

Embodiments of the present disclosure may include systems, methods, or computer readable media. In one embodiment, the present disclosure includes computer system comprising: at least one processor and at least one non-transitory computer readable medium (e.g., memory) storing computer executable instructions that, when executed by the at least one processor, cause the computer system to perform methods as described herein and in the following examples. In another embodiment, the present disclosure includes a non-transitory computer-readable medium storing computer-executable instructions that, when executed by at least one processor, perform the methods as described herein and in the following examples.

In one embodiment, the present disclosure includes a method comprising: receiving, in a computer system, a plurality of sets of hyperparameters configured to train a corresponding plurality of machine learning models using a plurality of training data sets, wherein the plurality of machine learning models having a same machine learning model type; receiving a first training data set not included in the plurality of training data sets; and performing each of the following steps over a plurality of iterations: (1) selecting one of the plurality of sets of hyperparameters based on a first selection algorithm; (2) training a first machine learning model using the first training data set and the selected one of the plurality of sets of hyperparameters, the first machine learning model having said same machine learning model type; (3) combining the first machine learning model with one or more machine learning models previously trained over the plurality of iterations; (4) determining a combined performance of the combined first machine learning model and the one or more machine learning models previously trained over the plurality of iterations; (5) determining if a change in the combined performance meets a threshold, wherein a result model is produced when the change in the combined performance meets the threshold, the result model comprising the first machine learning model and the one or more machine learning models previously trained over the plurality of iterations, and

wherein the following step (6) is performed when the change in the combined performance does not meet the threshold; and (6) modifying the selection algorithm based on the change in the combined performance.

In one embodiment, the plurality of machine learning models and the result model are generated successively by adding each particular trained machine learning model to a previously trained machine learning model.

In one embodiment, the result model is generated using a boosting algorithm.

In one embodiment, each of the plurality of machine learning models and each first machine learning model over the plurality of iterations comprise a weak learner model.

In one embodiment, a plurality of weak learner models are aggregated to form the result model, and wherein the result model has a greater performance than the plurality of weak learner models.

In one embodiment, the plurality of machine learning models, the first machine learning model, and the result model are tree type machine learning models.

In one embodiment, the plurality of machine learning models, the first machine learning model, and the result model are decision tree type machine learning models.

In one embodiment, modifying the selection algorithm based on the change in the combined performance comprises modifying one or more parameters of the selection algorithm.

In one embodiment, modifying the selection algorithm based on the change in the combined performance comprises modifying the selection algorithm based only on increases in the combined performance, wherein the iterations stop when a change in the combined performance decreases.

In one embodiment, the selection algorithm is an adversarial bandit algorithm.

In one embodiment, the adversarial bandit algorithm is an EXP3 algorithm.

In one embodiment, the method further comprising generating the plurality of sets of hyperparameters configured to train the corresponding plurality of machine learning models using the plurality of training data sets, said generating comprising: determining a set of candidate sets of hyperparameters for training the plurality of machine learning models using the plurality of training data sets; determining a plurality of regret values for the each of the candidate sets of hyperparameters used to train the plurality of data models; forming, based on the regret values, a plurality of subsets of the candidate sets of hyperparameters; determining a Sum of Excess Regret (SER) for each subset of the candidate sets of hyperparameters; and selecting the subset of candidate sets of hyperparameters having the lowest SER as the plurality of sets of hyperparameters.

The above description illustrates various embodiments along with examples of how aspects of some embodiments may be implemented. The above examples and embodiments should not be deemed to be the only embodiments, and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

**Claims**

1. A method comprising:

   receiving, in a computer system, a plurality of sets of hyperparameters configured to train a corresponding plurality of machine learning models using a plurality of training data sets, wherein the plurality of machine learning models having a same machine learning model type;
   receiving a first training data set not included in the plurality of training data sets; and
   performing each of the following steps over a plurality of iterations:

   (1) selecting one of the plurality of sets of hyperparameters based on a first selection algorithm;
   (2) training a first machine learning model using the first training data set and the selected one of the plurality of sets of hyperparameters, the first machine learning model having said same machine learning model type;
   (3) combining the first machine learning model with one or more machine learning models previously trained over the plurality of iterations;
   (4) determining a combined performance of the combined first machine learning model and the one or more machine learning models previously trained over the plurality of iterations;
   (5) determining if a change in the combined performance meets a threshold,

   wherein a result model is produced when the change in the combined performance meets the threshold, the result model comprising the first machine learning model and the one or more machine learning models previously trained over the plurality of iterations, and
   wherein the following step (6) is performed when the change in the combined performance does not meet the threshold; and

   (6) modifying the selection algorithm based on the change in the combined performance.

2. The method of claim 1, wherein the plurality of machine learning models and the result model are generated successively by adding each particular trained machine learning model to a previously trained machine learning model.

3. The method of claim 1 or 2, wherein the result model is generated using a boosting algorithm.

4. The method of any one of the preceding claims, wherein each of the plurality of machine learning models and each first machine learning model over the plurality of iterations comprise a weak learner model.

5. The method of claim 4, wherein a plurality of weak learner models are aggregated to form the result model, and wherein the result model has a greater performance than the plurality of weak learner models.

6. The method of any one of the preceding claims, wherein the plurality of machine learning models, the first machine learning model, and the result model are tree type machine learning models.

7. The method of claim 6, wherein the plurality of machine learning models, the first machine learning model, and the result model are decision tree type machine learning models.

8. The method of any one of the preceding claims, wherein modifying the selection algorithm based on the change in the combined performance comprises modifying one or more parameters of the selection algorithm.

9. The method of any one of the preceding claims, wherein modifying the selection algorithm based on the change in the combined performance comprises modifying the selection algorithm based only on increases in the combined performance, wherein the iterations stop when a change in the combined performance decreases.

10. The method of any one of the preceding claims, wherein the selection algorithm is an adversarial bandit algorithm.

**11.** The method of claim 10, wherein the adversarial bandit algorithm is an EXP3 algorithm.

**12.** The method of any one of the preceding claims, further comprising generating the plurality of sets of hyperparameters configured to train the corresponding plurality of machine learning models using the plurality of training data sets, said generating comprising:

determining a set of candidate sets of hyperparameters for training the plurality of machine learning models using the plurality of training data sets;
determining a plurality of regret values for the each of the candidate sets of hyperparameters used to train the plurality of data models;
forming, based on the regret values, a plurality of subsets of the candidate sets of hyperparameters;
determining a Sum of Excess Regret (SER) for each subset of the candidate sets of hyperparameters; and
selecting the subset of candidate sets of hyperparameters having the lowest SER as the plurality of sets of hyperparameters.

**13.** A computer system comprising:

at least one processor;
at least one non-transitory computer-readable medium storing computer-executable instructions that, when executed by the at least one processor, cause the computer system to perform a method according to any one of claims 1 to 12.

**14.** A non-transitory computer-readable medium storing computer-executable instructions that, when executed by at least one processor of a computer system, perform a method according to any one of claims 1 to 12.

**Fig. 1**

```
                    Receive sets of hyperparameters              201

                              │
                              ▼

                         Receive training data                   202

                              │
                              ▼

                    ┌──────────────┐
                    │    Iterate    │                            203
                    └──────────────┘
                              │
                              ▼

              Select hyperparameters using selection algorithm    204

                              │
                              ▼

             Train ML model using training data set and selected  205
                            hyperparameters

                              │
                              ▼

            Combine ML model with previously trained ML models    206

                              │
                              ▼

                 Determine combined performance                   207

                              │
                              ▼

     ┌──────────┐        ◇─────────◇
     │ Modify   │   N    │         │      Next
     │Selection │◄───────│   208   │      iteration?
     │Algorithm │        │         │
     └──────────┘        ◇─────────◇
  209                         │ Y
                              ▼

                      Output result model                         210
```

*Fig. 2*

Determine set of candidate hyperparameters — 303

Form subsets of the candidate hyperparameters — 304

Determine Sum of Excess Regret (SER) for subsets — 305

Select subset of candidate hyperparameters having lowest SER — 306

307

## Fig. 3A

**Computer System**
**350**

**Hyperparameter Generation**
**359**

Meta Dataset **351** → Hyperparameter Optimizer **352**

Candidates **353**

hyperparameters

Regret Matrix Computer **354** → Portfolio Builder **355**

Final Sets of H-params

**Computer System**
**300**

**AutoML software system**
**301**

Sets of Hyperparameters **310**

hyperparameters ~311a

hyperparameters ~311b

hyperparameters ~311x

Selection algorithm (params) **312**

H.P.

ML Training **113**

ML ~314

Training Data Set (new) **315**

Model Combiner **320**

ML | ML | • • • | ML

321a          321m

Performance Analyzer **330**

Result Model **340**

*Fig. 3B*

EP 4 730 210 A1

**361**

Meta-Dataset $T = \{t_1, \ldots, t_N\}$

| Task $t_1$ | | | | |
|---|---|---|---|---|
| $X_1^{(1)}$ | $X_2^{(1)}$ | ... | $X_{n_1}^{(1)}$ | $Y^{(1)}$ |
| a | 546 | ... | 1.1 | yes |
| z | 507 | ... | 9.8 | no |
| ⋮ | ⋮ | ⋱ | ⋮ | ⋮ |
| F | 24 | ... | 5.3 | yes |

| Task $t_2$ | | | | |
|---|---|---|---|---|
| $X_1^{(2)}$ | $X_2^{(2)}$ | ... | $X_{n_2}^{(2)}$ | $Y^{(2)}$ |
| 1 | s | ... | aA | 0 |
| 0 | a | ... | Gg | 1 |
| ⋮ | ⋮ | ⋱ | ⋮ | ⋮ |
| 5 | p | ... | KK | 1 |

...

| Task $t_N$ | | | | |
|---|---|---|---|---|
| $X_1^{(N)}$ | $X_2^{(N)}$ | ... | $X_{n_N}^{(N)}$ | $Y^{(N)}$ |
| 0.23 | 1 | ... | 88 | Y |
| 1.98 | 2 | ... | 587 | Y |
| ⋮ | ⋮ | ⋱ | ⋮ | ⋮ |
| 5.64 | 2 | ... | 111 | N |

Loss metric $L$ —
Search space $S$ —
Time budget $B$ —

**Hyperparameter Optimizer** **362**

**363**

Candidate Configurations $C = \{c_1, \ldots, c_N\}$

Configuration $c_1$
learning_rate = 0.12
max_depth = 2
...

Configuration $c_2$
learning_rate = 0.35
max_depth = 6
...

...

Configuration $c_N$
learning_rate = 0.56
max_depth = 3
...

**364**

**Regret Matrix Computer**

Regret matrix $R$

**365**

Target regret $\varepsilon$ —

**Portfolio Builder**

**366**

Portfolio $S = \{s_1, \ldots, s_P\}$, with $P < N$ and $S \subset C$

Configuration $s_1$
learning_rate = 0.35
max_depth = 6
...

Configuration $s_2$
learning_rate = 0.43
max_depth = 4
...

...

Configuration $s_P$
learning_rate = 0.08
max_depth = 5
...

## Fig. 3C

**Fig. 3D**

**Fig. 3E**

**Inputs:** dataset $\mathcal{D}$, loss function $L$, base learner algorithm $\mathcal{L}_\phi$, number of iterations $M$, learning rate $\eta$

**Initialization:** $\hat{f}^{(0)}(\mathbf{x}) = \hat{f}_0(\mathbf{x}) = \hat{\theta}_0 = \arg\min_\theta \sum_{i=1}^{n} L(y_i, \theta)$

**for** $m = 1, \ldots, M$ **do**

$$\hat{g}_m(\mathbf{x}_i) = \left.\frac{\partial L(y_i, z)}{\partial z}\right|_{z = \hat{f}^{(m-1)}(\mathbf{x}_i)}$$

$$\hat{h}_m(\mathbf{x}_i) = \left.\frac{\partial^2 L(y_i, z)}{\partial z^2}\right|_{z = \hat{f}^{(m-1)}(\mathbf{x}_i)}$$

$$\hat{\phi}_m = \arg\min_{\phi \in \Phi} \sum_{i=1}^{n} \frac{1}{2} \hat{h}_m(\mathbf{x}_i) \left[ \left( -\frac{\hat{g}_m(\mathbf{x}_i)}{\hat{h}_m(\mathbf{x}_i)} \right) - \phi(\mathbf{x}_i) \right]^2$$

$$\hat{f}_m(\mathbf{x}) = \eta \hat{\phi}_m(\mathbf{x})$$

$$\hat{f}^{(m)}(\mathbf{x}) = \hat{f}^{(m-1)}(\mathbf{x}) + \hat{f}_m(\mathbf{x})$$

**Output:** $\hat{f}(\mathbf{x}) \equiv \hat{f}^{(M)}(\mathbf{x}) = \sum_{m=0}^{M} \hat{f}_m(\mathbf{x})$

# Fig. 4A

**Parameters:** real $\eta \in (0, 1]$, real $\gamma \in (0, 1)$

**Initialization:** $w_i(1) = 1$ for all arms $i = 1, \ldots, K$

**for** $t = 1, \ldots, T$ **do**

    Set

$$p_i(t) = (1 - \gamma)\frac{w_i(t)}{\sum_{j=1}^{K} w_j(t)} + \frac{\gamma}{K} \quad i = 1, \ldots, K$$

    Select arm $i_t$ randomly according to the probabilities $p_1(t), \ldots, p_K(t)$

    Receive reward $x_{i_t}(t) \in [0, 1]$

    For $j = 1, \ldots, K$ set

$$\hat{x}_j(t) = \begin{cases} \dfrac{x_j(t)}{p_j(t)} & \text{if } j = i_t \\ 0 & \text{otherwise} \end{cases}$$

$$w_j(t+1) = w_j(t) \exp\left(\frac{\eta \hat{x}_j(t)}{K}\right)$$

# Fig. 4B

**500**

**Fig. 5**

EP 4 730 210 A1

Europäisches
Patentamt
European
Patent Office
Office européen
des brevets

# EUROPEAN SEARCH REPORT

**Application Number**

EP 25 19 5916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DANG NGUYEN ET AL: "Bayesian Optimization for Categorical and Category-Specific Continuous Inputs", ARXIV.ORG, CORNELL UNIVERSITY LIBRARY, 201 OLIN LIBRARY CORNELL UNIVERSITY ITHACA, NY 14853, 28 November 2019 (2019-11-28), XP081541318, * page 1 - page 7 * ----- | 1-14 | INV. G06N5/01 G06N20/20 |

TECHNICAL FIELDS
SEARCHED (IPC)

G06N

The present search report has been drawn up for all claims

| Place of search | Date of completion of the search | Examiner |
|---|---|---|
| The Hague | 19 January 2026 | Bohn, Patrice |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)